# EUROPÄISCHE PATENTSCHRIFT

(11) **EP 2 848 834 B1**
(45) Veröffentlichungstag und Bekanntmachung des Hinweises auf die Patenterteilung: **22.01.2020**
(21) Anmeldenummer: 14177530.4
(22) Anmeldetag: 17.07.2014
(51) Int. Cl.: F16C 35/077, F16C 35/063, F16C 35/067, F16C 35/073

(54) **Röhrenförmiger Körper zur Montage auf einer Welle oder ein einer Bohrung und Verfahren zur Montage**
Tubular body for mounting on a shaft or a bore and method for mounting same
Corps en forme de tuyau destiné à être monté sur un arbre ou un forage et procédé de montage

(30) Priorität: 01.08.2013 DE 102013215170
(43) Veröffentlichungstag der Anmeldung: 18.03.2015
(73) Patentinhaber: Aktiebolaget SKF, 415 50 Göteborg (SE)
(72) Erfinder: Heege, Thomas, 97526 Sennfeld (DE)
(74) Vertreter: Kuhstrebe, Jochen

(56) Entgegenhaltungen:
- EP-A1- 1 068 926
- EP-B1- 1 078 196
- DE-A1- 2 400 902
- DE-B- 1 116 481
- US-A- 5 249 869
- US-A- 5 866 647

## Beschreibung

Ausführungsbeispiele beziehen sich auf einen röhrenförmigen Körper zur Montage auf einer Welle, einen röhrenförmigen Körper zur Montage in einer Bohrung und Verfahren zur Montage des röhrenförmigen Körpers nach den unabhängigen Ansprüchen.

Bei der Montage von Bauteilen, die aus unterschiedlichen Materialien bestehen, kann es aus unterschiedlichen Gründen zu Schwierigkeiten kommen. Beispielsweise weisen faserverstärkte Kunststoffe ein anderes Temperaturverhalten auf als metallische Werkstoffe. So zeigen Bauteile aus einem faserverstärkten Kunststoff (FVK-Bauteile) je nach ihren Bestandteilen beispielsweise eine stark verringerte Wärmeausdehnung, beispielsweise gegenüber metallischen Werkstoffen, oder sogar ein Schrumpfen bei einer Wärmezufuhr. Aber nicht nur der Wärmeausdehnungskoeffizient, sondern auch eine Richtung der Ausdehnung von faserverstärkten Werkstoffen kann sich beispielsweise aufgrund des anisotropen Verhaltens von faserverstärkten Kunststoffen von einer Richtung der Ausdehnung eines metallischen Werkstoffs unterscheiden.

Diese Gründe können beispielsweise dazu führen, dass zur Montage eines Ringes aus einem faserverstärkten Kunststoff (FVK) auf einer Welle dieser nicht einfach erwärmt werden kann, um einen Durchmesser, beispielsweise einen Innendurchmesser, des Ringes zu vergrößern. Ferner kann der Ring aus dem faserverstärkten Kunststoff auch nicht einfach abgekühlt werden, um einen Durchmesser, beispielsweise einen Außendurchmesser zu verkleinern, um eine Montage in einer Bohrung oder einem Gehäuse zu ermöglichen.

Diese Schwierigkeiten können beispielsweise für einen sogenannten Hybridring aus einem faserverstärkten Kunststoff (Faserteil) und Stahl auftreten. Der Hybridring aus faserverstärktem Kunststoff und Stahl wird oft in der Form verwendet, dass der Stahlteil einen ersten Teil für die Laufbahn bildet und das Faserteil den Unterbau dazu. Aufgrund der beschriebenen unterschiedlichen Wärmeausdehnungen könnte es beispielsweise schwierig sein, den Ring mit einer Überdeckung, also einem negativen Spiel, ohne Presse auf eine Welle oder in ein Gehäuse bzw. einer Bohrung zu montieren.

Bei konventionellen Lösungen kann beispielsweise zur Montage eines faserverstärkten Kunststoffringes auf einer metallischen Welle die Welle abgekühlt werden, um den faserverstärkten Kunststoffring mit einer Überdeckung zu montieren. Dies kann allerdings, je nach Größe der Welle und nach Höhe der Überdeckung sehr aufwendig und damit gegebenenfalls teuer sein.

Bei alternativen konventionellen Lösungen kann der Ring beispielsweise kalt bzw. bei einer Umgebungstemperatur auf die Welle oder in das Gehäuse eingepresst werden. Dies könnte unter Umständen zu Beschädigungen an dem Ring, an der Welle und/oder dem Gehäuse beziehungsweise der Bohrung, in die der Ring eingepresst wird, führen.

EP1 068 926 A1 lehrt ein Verfahren, das das Einführen eines metallischen Rings in ein Verbundmaterialteil mit organischer Matrix entweder nach der Herstellung dieses Teils oder während dieser Herstellung ermöglicht.

US 5249869 zeigt ein Verfahren zur Montage eines röhrenförmigen Körpers mit einer ersten Schicht und einer zweiten Schicht auf einer Welle.

Es besteht daher ein Bedarf daran, ein Bauteil, das einen faserverstärkten Kunststoff umfasst, bereitzustellen, das besser montiert werden kann und ein Verfahren zur Montage eines solchen Bauteils.

Diesem Bedarf tragen die röhrenförmigen Körper und die Verfahren nach den unabhängigen Ansprüchen Rechnung.

Ausführungsbeispiele betreffen einen röhrenförmigen Körper zur Montage auf einer Welle. Der röhrenförmige Körper umfasst eine erste radial innen liegende Schicht. Ferner umfasst der röhrenförmige Körper eine zweite radial außen liegende Schicht aus einem faserverstärkten Material. Die erste radial innen liegende Schicht dehnt sich bei einem Einwirken einer Temperatur stärker aus, als die zweite radial außen liegende Schicht.

Dadurch, dass der röhrenförmige Körper eine radial innen liegende Schicht aufweist, die sich bei einem Einwirken einer Temperatur stärker ausdehnt als die zweite radial außen liegende Schicht, könnte beispielsweise ermöglicht werden, dass die Montage eines Ringes, der zumindest teilweise aus faserverstärktem Kunststoff besteht bzw. diese umfasst, auf einer Welle mit einer Überdeckung ohne eine Presse ermöglicht werden kann. Mit anderen Worten ausgedrückt, kann dadurch beispielsweise erreicht werden, dass der röhrenförmige Körper mit einem negativen Spiel in eine radiale Richtung auf der Welle montiert werden kann. Unter Umständen könnte dies ermöglicht werden, weil sich die radial innen liegende Schicht ausdehnt und dabei ggf. die radial außen liegende faserverstärkte Schicht mit aus-dehnen kann.

Ein röhrenförmiger Körper kann beispielsweise jedwedes Bauteil sein, das eine Bohrung aufweist. Beispielsweise kann ein röhrenförmiger Körper ein Zylinder sein, aus dem ein konzentrisch zu dem Zylinder angeordneter zweiter Zylinder entfernt wurde. Beispiele für einen röhrenförmigen Körper sind ein Ring, ein Rohr, eine Manschette, etc. Beispielsweise kann der röhrenförmige Körper jedwede Querschnittsfläche aufweisen. Beispiele können sein: Kreisringscheibe, einen Vieleckringscheiben, Rechteckringscheibe, ovaler Ring, etc.

Eine radial innen liegende Schicht kann beispielsweise jedwedes Bauteil sein, das auf einem kleineren Durchmesser angeordnet ist als die radial außen liegende Schicht. Beispielsweise kann die radial innen liegende Schicht ein Ring oder ein Hohlzylinder sein. Analog kann die radial außen liegende Schicht beispielsweise jedwedes Bauteil sein, das auf einem größeren Durchmesser angeordnet ist, als die radial innen liegende Schicht. Beispielsweise kann die radial außen liegende Schicht als Hohlzylinder oder Ring ausgebildet sein. Bei einigen weiteren Ausführungsbeispielen sind die radial innen liegende Schicht und die radial außen liegende Schicht konzentrisch zueinander und/oder konzentrische zu dem röhrenförmigen Körper angeordnet. Dadurch könnte ggf. ermöglicht werden, dass der röhrenförmige Körper als ein rotationssymmetrisches Bauteil ausgebildet ist. Die radial innen liegende Schicht kann beispielweise in einem montierten Zustand direkt an der Welle anliegen. Beispielsweise kann die radial außenliegende Schicht direkt an der radial innenliegenden Schicht anliegen, also beispielsweise nicht durch eine andere Schicht beabstandet sein.

Eine Temperatur unter deren Einwirken sich die radial innen liegende Schicht stärker ausdehnt als die zweite radial außen liegende Schicht, ist eine Temperatur, die gegenüber einer Umgebungstemperatur oder einer Raumtemperatur erhöht ist. Beispielsweise kann die Temperatur in einem Bereich liegen, der einen Anfangswert und einen Endwert aufweist. Beispielsweise kann ein Anfangswert des Bereichs 30°C, 40°C, 50°C, 60°C, 70°C oder 80°C, 90°C sein, beispielsweise kann ein Endwert des Bereichs 400°C; 250°C, 220°C, 200°C, 190°C, 180°C, 170°C, 160°C, 150°C, 140°C, 130°C, 120°C, 110°C, 100°C, 90°C oder 80°C sein.

Bei einigen weiteren Ausführungsbeispielen ist ein Verhältnis aus einer Wandstärke der radial innen liegenden Schicht und einer Wandstärke der radial außen liegenden Schicht größer oder gleich 0,1; 0,2; 0,3; 0,5 oder 1. Beispielsweise kann das Verhältnis maximal einen Wert aufweisen, der in einem Wertebereich mit einem Anfangs und oder einen Endwert liegt, die 0,2; 0,5; 0,6; 0,7; 0,75; 0,8; 0,9 und/oder 1 betragen. Dadurch könnte beispielsweise erreicht werden, dass sich die radial innen liegende Schicht bei einem Einwirken einer Temperatur stärker ausdehnt als die radial außen liegende Schicht. Mit anderen Worten ausgedrückt, kann die radial innen liegende Schicht eine größere Wandstärke als die radial außen liegende Schicht aufweisen. Bei einigen weiteren Ausführungsbeispielen können die radial innen liegende Schicht und die radial außen liegende Schicht in axialer Richtung die gleiche Breite aufweisen. Entsprechend kann ggf. die radial innen liegende Schicht dicker ausgebildet sein, als die radial außen liegende Schicht.

Beispielsweise können die Schichten miteinander verbunden sein. Beispielsweise können die Schichten kraft-und/oder formschlüssig miteinander verbunden sein. Beispielsweise können die Schichten miteinander verklebt sein. Bei weiteren Ausführungsbeispielen können die Schichten lösbar miteinander verbunden sein. Dadurch könnte beispielsweise ermöglicht werden, dass die radial innenliegende Schicht nach der Montage wieder entfernt werden kann.

Bei einigen weiteren Ausführungsbeispielen kann die radial innen liegende Schicht einen Außendurchmesser aufweisen, der im Wesentlichen einem Innendurchmesser einer Innenbohrung der radial außen liegenden Schicht entspricht. Dadurch könnte in manchen Fällen ermöglicht werden, dass die radial außen liegende Schicht zu einer Verbindung mit der radial innen liegenden Schicht auf einen Außenumfang der radial innen liegenden Schicht geschoben werden kann. Beispielsweise können ein Außendurchmesser eines Außenumfangs der radial innen liegenden Schicht so zu einer Innenbohrung bzw. einem Innendurchmesser der radial außen liegenden Schicht dimensioniert sein, dass diese ein radiales Spiel zueinander aufweisen. Das radiale Spiel kann ggf. so dimensioniert sein, dass die radial außen liegende Schicht und die radial innen liegende Schicht beispielsweise bei Raumtemperatur einen Schiebesitz zueinander aufweisen. Dadurch könnten ggf. ermöglicht werden, dass die radial innen liegende Schicht beispielsweise bei Umgebungstemperatur in eine Bohrung der radial außen liegenden Schicht geschoben werden kann.

Bei einigen weiteren Ausführungsbeispielen umfasst die radial innen liegende Schicht einen metallischen Werkstoff. So könnte ggf. auf einfache Art und Weise erreicht werden, dass sich die radial innen liegende Schicht stärker ausdehnt als die radial außen liegende Schicht. Beispielsweise kann der metallische Werkstoff ein Stahl sein. Dadurch könnte beispielsweise ermöglicht werden, dass die radial innen liegende Schicht aus einem gut bearbeitbaren, kostengünstigen, mit Umgebungsmaterialien chemisch verträglichen oder verschleißverhindernden Material herstellbar sein kann. Weitere Beispiele für metallische Werkstoffe sind Eisen, Chrom, Aluminium, Kupfer, und/oder Legierungen die diese oder andere metallische Werkstoffe umfassen.

Bei einigen weiteren Ausführungsbeispielen kann die radial innen liegende Schicht einen Werkstoff umfassen, der einen größeren Wärmeausdehnungskoeffizienten aufweist als der Werkstoff oder ein Material der radial außen liegenden Schicht. Dadurch könnte evtl. ermöglicht werden, dass dich die radial innen liegende Schicht stärker ausdehnt als die radial außen liegende Schicht.

Bei einigen weiteren Ausführungsbeispielen kann das faserverstärkte Material jedwedes faserverstärkte Material sein. Beispielsweise kann das faserverstärkte Material ein Faserverbundkunststoff (FVK), ein kohlefaserverstärkter Kunststoff (CFK), ein glasfaserverstärkter Kunststoff (GFK), ein aramidfaserverstärkter Kunststoff (AFK), ein naturfaserverstärketer Kunststoff (NFK) und/oder ein Faser-Keramik-Verbund (CMC) sein. Dadurch könnte unter Umständen ermöglicht werden, dass der Körper ein geringes Gewicht aufweist. Dadurch könnte ggf. bei Fahrzeugen die den röhrenförmigen Körper umfassen ein geringere CO₂ ein Ausstoß bewirkt werden. Ferner könnte das leichtere Bauteil ggf. ein geringeres Trägheitsmoment aufweisen leichter Beschleunigt werden. Ebenfalls könnte unter Umständen eine Montage oder Demontage des Körpers erleichtert werden. Ein solcher Hybridring könnte beispielsweise lange, beinahe endlose Verstärkungsfasern wie Kohle, Glas oder Aramidfasern beinhalten, die durch ein Wickelverfahren durch Rotation des Grundkörpers um eine Achse aufgewickelt werden. Diese Fasern können ggf. in einem duroplastischen oder thermoplastischen Grundmaterial/Matrix eingebettet sein, das als Harz-System ausgebildet sein kann. Beispielsweise kann das faserverstärkte Material eine Faser aufweisen, die länger als 1 mm 20 mm, 30 mm, 40, mm 50 mm ist.

Bei einigen weiteren Ausführungsbeispielen weist die radial außen liegende Schicht einen thermischen Ausdehnungskoeffizienten auf, der in einem Wertebereich mit einem Anfangswert und eine Endwert liegt. Der Endwert kann beispielsweise zwischen 0,1 · 10⁻⁵ 1/k oder 1,5 · 10⁻⁵ 1/k betragen. Der Endwert kann beispielsweise 1,5 · 10⁻⁵ 1/k; 2,0 · 10⁻⁵ 1/k oder 2,5 · 10⁻⁵ 1/k betragen. Dadurch kann beispielsweise erreicht werden, dass sich die radial außen liegende Schicht bei einem Einwirken einer Temperatur weniger stark ausdehnt als die radial innen liegende Schicht. Bei einigen weiteren Ausführungsbeispielen kann die radial innen liegende Schicht einen thermischen Ausdehnungskoeffizienten aufweisen, der in einem Wertebereich mit einem Anfangswert und einem Endwert liegen kann. Beispielsweise kann der Anfangswert 0,1 · 10⁻⁵ 1/k; 1,0 · 10⁻⁵ 1/k; 1,2 · 10⁻⁵ 1/k; oder 1,3 · 10⁻⁵ 1/k betragen. Der Endwert kann beispielsweise 1,3 · 10⁻⁵ 1/k; 1,4 · 10⁻⁵ 1/k; 1,5 · 10⁻⁵ 1/k oder 2,5 · 10⁻⁵ 1/k betragen. So könnte gegebenenfalls erreicht werden, dass sich die radial innen liegende Schicht bei einem Einwirken einer Temperatur stärker ausdehnt als die zweite radial außen liegende Schicht.

Bei einigen weiteren Ausdehnungsbeispielen weist die radial außen liegende Schicht eine Querkontraktionszahl in einem Wertebereich auf. Der Wertebereich kann einen Anfangswert und einen Endwert aufweisen. Der Endwert oder der Anfangswert kann beispielsweise jeweils 0; 0,1; 0,4; 0,6; 0,8; 1,0; 1,2; 1,4; 1,6; 1,8; 2,0; 2,2; 2,4 oder 2,5 betragen. Dadurch könnte beispielsweise erreicht werden, dass sich die radial außen liegende Schicht weniger stark ausdehnt als die radial innen liegende Schicht. Bei der Querkontraktionszahl, auch Poisson'sche Zahl genannt, handelt es sich um einen dimensionslosen Wert, der die Deformation eines festen Körpers bei annähernd gleichem Volumen beschreibt. Beispielsweise kann die Querkontraktionszahl das Verhalten eines Festkörpers unter dem Einfluss einer Zugkraft bzw. einer Druckkraft beschreiben.

Bei einigen weiteren Ausführungsbeispielen weist die radial innen liegende Schicht eine Querkontraktionszahl auf die in einem Wertebereich zwischen 0,2 und 0,4 liegt. Beispielsweise kann die Querkontraktionszahl 0,3 sein. In manchen Fällen könnte so erreicht werden, dass sich die radial innen liegende Schicht bei einem Einwirken einer Temperatur stärker ausdehnt, als die radial außen liegende Schicht.

Bei einigen weiteren Ausführungsbeispielen weist die radial außen liegende Schicht einen Elastizitätsmodul auf, der in einem Bereich zwischen 100.000 MPa und 600.000 MPa liegt, beispielsweise bei ca. 210.000 MPa. So könnte ggf. ein ausreichendes Verformungsverhalten der radial außen liegenden Schicht während der Montage mittels Wärme ermöglicht werden. Unter Umständen könnte so ggf. die Gefahr miniert werden, dass die radial außen liegende Schicht bei der Montage reißt.

Bei einigen weiteren Ausführungsbeispielen weist die radial innen liegende Schicht einen Elastizitätsmodul auf, der in einem Bereich zwischen 200.000 MPa und 250.000 MPa liegt, beispielsweise bei ca. 210.000 MPa. So kann könnte beispielsweise erreicht werden, dass die radial innen liegende Schicht eine ausreichende Verformungsfähigkeit zur Montage mit Wärme hat.

Bei einigen weiteren Ausführungsbeispielen ist der röhrenförmige Körper ein Innenring eines Lagers. Unter Umständen könnte dadurch ermöglicht werden, dass ein sogenanntes Faserverbund-Leichtbau-Lager besser montiert werden kann. Beispielsweise kann der röhrenförmige Körper eine dritte, radial außen liegende Schicht aufweisen. Diese dritte radial außen liegende Schicht kann beispielsweise eine Lauffläche ausbilden. Dadurch könnte beispielsweise ermöglicht werden, dass der Innenring eine gleichmäßige Lauffläche aufweist. Beispielsweise kann die dritte radial außen liegende Schicht aus einem metallischen oder keramischen Werkstoff hergestellt sein oder direkt in das Material der radial außen liegende Schicht eingearbeitet sein. So könnte beispielsweise ermöglicht werden, dass die Lauffläche sehr stabil ist. Mit anderen Worten ausgedrückt, könnte in manchen Fällen ein Wälzlagerring oder Gleitlagerring aus einem Faserverbundmaterial und einem Metall bereitgestellt werden, bei dem es möglich sein könnte, den Außen- oder Innendurchmesser durch Erwärmen oder Kühlen zu verändern. Durch diese Veränderung könnte beispielsweise eine Montage eines röhrenförmigen Körpers aus einem faserverstärkten Kunststoff bzw. der zumindest als einen Werkstoff einen faserverstärkten Kunststoff umfasst, auf einer Welle mit einer Überdeckung, ohne Verwendung einer Presse, ermöglicht werden.

Einige Ausführungsbeispiele betreffen einen röhrenförmigen Körper zur Montage in einer Bohrung. Der röhrenförmige Körper umfasst eine erste radial außen liegende Schicht. Ferner umfasst der röhrenförmige Körper eine zweite radial innen liegende Schicht aus einem faserverstärkten Material. Die erste radial außen liegende Schicht schrumpft bei einem Einwirken einer Temperatur stärker als die zweite radial innen liegende Schicht. So kann gegebenenfalls ermöglicht werden, dass der ringförmige Körper in einem Gehäuse oder einer Bohrung, ggf. mit einer Überdeckung, montiert werden kann. Dabei kann eine Temperatur, die auf den Körper bzw. die radial außen liegende Schicht einwirkt ggf. geringer als eine Umgebungstemperatur sein.

Beispielsweise liegt die Temperatur in einem Wertebereich der einen Anfangswert und einen Endwerte aufweist. Der Anfangswert oder der Endwert können jeweils -200°C; -196 °C; -150°C; -100°C; -78°C; -50° oder 0°C sein.

Bei einigen weiteren Ausführungsbeispielen umfasst die radial außen liegende Schicht einen metallischen Werkstoff. So könnte unter Umständen auf einfache Art und Weise bewirkt werden, dass die radial außen liegende Schicht bei einem Einwirken einer Temperatur stärker schrumpft als die radial innen liegende Schicht. Beispiele für metallische Werkstoffe sind Eisen, Chrom, Aluminium, Kupfer, und/oder Legierungen die diese oder andere metallische Werkstoffe umfassen.

Bei einigen weiteren Ausführungsbeispielen ist der ringförmige Körper ein Außenring eines Lagers. Beispielsweise kann der ringförmige Körper eine dritte, radial innen liegende Schicht aufweisen, die die Lauffläche ausbildet. So könnte beispielsweise ermöglicht werden, dass der Außenring eine stabile Lauffläche aufweist. Beispielsweise kann die dritte, radial innen liegende Schicht aus einem metallischen oder keramischen Werkstoff hergestellt sein oder direkt in das Material der radial außen liegende Schicht eingearbeitet sein. So könnte beispielsweise eine stabile Lauffläche bereitgestellt werden. Mit anderen Worten ausgedrückt, könnte ein Wälzlagerring oder Gleitlagerring, beispielsweise ein Außenring, bereitgestellt werden aus einem Faserverbundmaterial und einem Metall, bei dem es möglich sein könnte, den Außendurchmesser durch Kühlen zu verändern. Durch diese Veränderung könnte beispielsweise eine Montage eines Ringes aus einen faserverstärkten Kunststoff bzw. der zumindest als einen Werkstoff einen faserverstärkten Kunststoff umfasst in ein Gehäuse oder eine Bohrung mit einer Überdeckung, ohne eine Presse, zu verwenden möglich sein.

Bei einigen weiteren Ausführungsbeispielen umfasst der röhrenförmigen Körper eine Temperiereinrichtung, die ausgebildet ist, den Körper zu erwärmen und/oder abzukühlen so dass das Auszudehnen bzw. Schrumpfen der Schichten bewirkt werden kann. Dadurch könnte ggf. die Montage des Körpers vereinfacht werden. Beispielsweise kann die Temperiereinrichtung eine Heizung oder ein Kühlelement sein.

Einige Ausführungsbeispiele betreffen ein Verfahren zur Montage eines röhrenförmigen Körpers auf einer Welle. Der Körper weist eine erste Schicht auf. Ferner weist der Körper eine zweite Schicht aus einem faserverstärkten Material auf. Bei dem Verfahren werden zuerst die erste Schicht und die zweite Schicht so zueinander angeordnet, dass die erste Schicht in einem radial inneren Bereich der zweiten Schicht aus dem faserverstärkten Werkstoff liegt. Der röhrenförmige Körper und/oder die radial innen liegende Schicht werden auf eine Temperatur, die gegenüber einer Umgebungstemperatur erhöht ist, erwärmt. Anschließend wird der röhrenförmige Körper auf einer Welle montiert. Beispielsweise kann die erste Schicht konzentrisch zu der zweiten Schicht angeordnet werden. Ergänzend oder alternativ kann die erste Schicht in einer Bohrung der zweiten Schicht angeordnet werden. Dadurch könnte beispielsweise ermöglicht werden, dass ein faserverstärkter Ring durch die radial innen angeordnete Schicht so aufgeweitet und/oder gedehnt werden kann, dass er auf einer Welle montiert werden kann. Die innen liegende Schicht könnte quasi als ein Adapter, mit dem der Presssitz mit der Welle hergestellt werden kann und/oder gleichzeitig der faserverstärkte Ring gedehnt werden kann, verwendet werden.

Beispielsweise kann die radial außen liegende Schicht aus dem faserverstärktem Material eine Innenbohrung aufweisen, die einen Durchmesser aufweist, der im Wesentlichen einem Außendurchmesser der radial innen liegenden Schicht entspricht. Beispielsweise könnten die beiden Durchmesser so zueinander dimensioniert sein, dass die beiden Bauteile in radialer Richtung ein Spiel zueinander aufweisen. Durch dieses Spiel könnte ermöglicht werden, dass die radial innen liegende Schicht bei Zimmertemperatur beispielsweise bei Raumtemperatur in die radial außen liegende Schicht, beispielsweise von Hand geschoben werden kann. Dadurch könnte beispielsweise ermöglicht werden, dass beim Fügen bzw. einer Montage der radial innen liegenden Schicht in die radial außen liegende Schicht keines der beiden Bauteile beschädigt wird. Anschließend kann der röhrenförmige Körper beispielsweise aber auch hauptsächlich die radial innen liegende Schicht, erwärmt werden. Unter Umständen könnte einer Erwärmung der radial innen liegenden Schicht auch zu einem Erwärmen der radial außen liegenden Schicht führen. Dies könnte beispielsweise gewünscht sein oder hingenommen werden.

Mit anderen Worten ausgedrückt, könnte beispielsweise durch das Erwärmen der radial innen liegenden Schicht bewirkt werden, dass sich diese in radiale Richtung ausdehnt. Das könnte bedeuten, dass sich eine Bohrung (in axialer Richtung) der radial innen liegenden Schicht ebenfalls in radiale Richtung vergrößert bzw. einen zumindest vorübergehend größeren Durchmesser erhält. Ferner könnte ebenfalls bewirkt werden, dass sich auch ein Au-ßenumfang der radial innen liegenden Schicht in radial Richtung ausdehnt bzw. vergrößert. Dadurch könnte bspw. erreicht werden, dass die radial außen liegende Schicht aus dem faserverstärkten Werkstoff gedehnt wird. Ferner könnte in manchen Fällen die radial innen liegende Schicht durch die radial außen liegende Schicht eingeschnürt werden. Dadurch, dass sich die Innenbohrung der radial innen liegenden Schicht vergrößert, könnte beispielsweise ermöglicht werden, dass die radial innen liegende Schicht und damit der ganze röhrenförmige Körper auf eine Welle geschoben werden kann. Nach einem Abkühlen der radial innen liegenden Schicht geht die Bohrung bzw. der Bohrungsquerschnitt wieder auf seine ursprüngliche Größe zurück. So könnt ggf. eine kraftschlüssige Verbindung zwischen der Welle und der inneren Bohrung hergestellt. Dadurch könnte der faserverstärkte ggf. Ring kraftsschlüssig auf der Welle montiert werden.

Bei einigen weiteren Ausführungsbeispielen wird der röhrenförmig Körper beispielsweise auf eine Temperatur erwärmt, die in einem Bereich liegt, der einen Anfangswert und einen Endwert aufweist. Beispielsweise kann ein Anfangswert des Bereichs 30°C, 40°C, 50°C, 60°C, 70°C oder 80°C, 90°C sein, beispielsweise kann ein Endwert des Bereichs 250°C, 220°C, 200°C, 190°C, 180°C, 170°C, 160°C, 150°C, 140°C, 130°C, 120°C, 110°C, 100°C, 90°C oder 80°C sein.

Einige Ausführungsbeispiele betreffen ein Verfahren zur Montage eines röhrenförmigen Körpers mit einer ersten Schicht und einer zweiten Schicht aus einem faserverstärkten Material in eine Bohrung. Dabei werden die Schichten beispielsweise konzentrisch zueinander angeordnet, sodass die erste Schicht radial außen liegt und die zweite Schicht aus dem faserverstärkten Werkstoff radial innen liegt. Anschließend wird die radial außen liegende Schicht abgekühlt. Dabei wird die radial außen liegende Schicht auf eine Temperatur, die kleiner als eine Umgebungstemperatur ist, abgekühlt. Anschließend wird der röhrenförmige Körper in der Bohrung angeordnet. So könnte beispielsweise ein röhrenförmiger Körper, der einen faserverstärkten Werkstoff umfasst, auf einfache Art und Weise, beispielsweise ohne eine Presse in einer Bohrung, beispielsweise eines Gehäuses, montiert werden.

Weitere vorteilhafte Ausgestaltungen werden nachfolgend anhand von in den Zeichnungen dargestellten Ausführungsbeispielen, auf welcher Ausführungsbeispiele jedoch nicht beschränkt sind, näher beschrieben.

So zeigen die Figuren schematisch die nachfolgenden Ansichten:
- Fig. 1: zeigt eine schematische Querschnittsdarstellung eines röhrenförmigen Körpers, der auf einer Welle montiert ist nach einem Ausführungsbeispiel;
- Fig. 2: zeigt eine schematische Querschnittsdarstellung eines röhrenförmigen Körpers, der in einer Bohrung montiert ist nach einem Ausführungsbeispiel;
- Fig. 3: zeigt eine schematische Darstellung eines Verfahrens zur Montage eines röhrenförmigen Körpers auf einer Welle nach einem Ausführungsbeispiel;
- Fig. 4: zeigt eine schematische Darstellung eines Verfahrens zu Montage eines röhrenförmigen Körpers in einer Bohrung gemäß einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

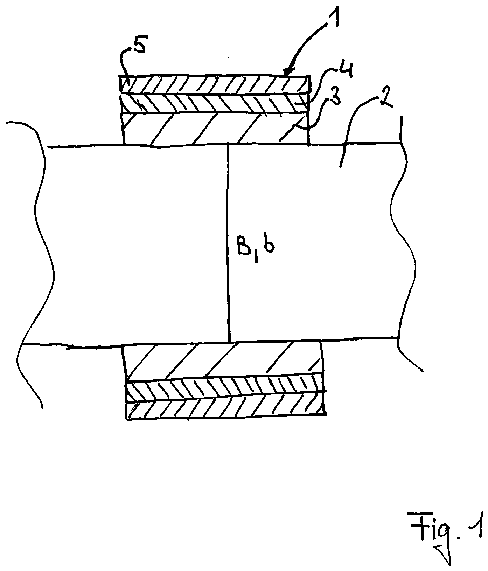

Fig. 1 zeigt eine schematische Querschnittsdarstellung eines röhrenförmigen Körpers, der auf einer Welle montiert ist.

Wie in Fig. 1 dargestellt, umfasst ein röhrenförmiger Körper 1, zur Montage auf einer Welle 2 eine erste radial innen liegende Schicht 3 und eine zweite radial außen liegende Schicht 4 aus einem faserverstärktem Werkstoff. Die erste radial innen liegende Schicht 3 dehnt sich bei einem Einwirken einer Temperatur stärker aus als die zweite radial außen liegende Schicht 4.

Ferner ist bei dem Ausführungsbeispiel der Fig. 1 noch eine optionale dritte radial außen liegende Schicht 5 dargestellt, die eine Lauffläche ausbilden kann. Bei dem Ausführungsbeispiel der Fig. 1 kann die radial innen liegende Schicht aus einem metallischen Werkstoff hergestellt sein.

Bei dem Ausführungsbeispiel der Fig. 1 kann der röhrenförmige Körper 1 beispielsweise ein Innenring für ein Wälzlager sein. Dazu kann beispielsweise als röhrenförmiger Körper 1 ein Ring bereitgestellt werden, der aus drei Teilen besteht. Als ersten Teil weist der röhrenförmige Körper 1 die dritte Schicht 5 auf, die die Laufbahn ausbildet. Als zweiten Teil weist der röhrenförmige Körper 1 die radial außen liegende Schicht 4, aus einem faserverstärktem Material, auf. Dadurch könnte beispielsweise ermöglicht werden, dass der Ring ein geringes Gewicht ausweist. Als dritten Teil kann der ringförmige Körper 1 die radial innen liegende Schicht 3 aufweisen, die eine stärkere Wärmeausdehnung als das faserverstärkte Material aufweist.

Bei einer Erwärmung des röhrenförmigen Körpers 1 oder einer Erwärmung der radial innen liegenden Schicht 3 würde sich dieser dritte Teil unter Umständen stärker ausdehnen als die radial außen liegende Schicht 4 aus dem faserverstärkten Material. Dabei könnte die radial innen liegende Schicht die radial außen liegende Schicht mit ausdehnen. Dies könnte beispielsweise dadurch bewirkt werden, weil eine Kraft, die die radial innen liegende Schicht 3 durch die Ausdehnung erzeugen kann, größer sein kann als eine Kraft, die die radial außen liegende Schicht 4 aufbringen kann, um entgegen der Ausdehnung durch die radial innen liegende Schicht 3 zu arbeiten.

Das faserverstärkte Material könnte gegebenenfalls einen Elastizitätsmodul aufweisen, der im Wesentlichen einem Elastizitätsmodul des Materials der radial innen liegenden Schicht 3 entspricht.

Ferner könnte beispielsweise die radial innen liegende Schicht 3 verhindern, dass sich die faserverstärkte Schicht 4 von der dritten radial außen liegenden Schicht 5 (Laufbahn-Teil) ablöst. Diese Gefahr des Ablösens könnte beispielsweise bestehen, wenn die dritte radial außen liegende Schicht 5 aus einem metallischen Werkstoff (Metall) besteht. Beispielsweise könnte sich die dritte radial außen liegende Schicht 5, die die Laufbahn ausbildet, in einem Betrieb, beispielsweise auf eine Betriebstemperatur, erwärmen und sich ausdehnen. Da sich das faserverstärkte Material der radial außen liegenden Schicht 4 jedoch ggf. nicht so stark wie die radial außen liegende dritte Schicht 5 ausdehnen kann, könnte die Gefahr bestehen, dass sich die dritte radial außen liegende Schicht 5 und die radial außen liegende Schicht 4 voneinander ablösen. Weil der röhrenförmige Körper 1 ein weiteres Bauteil, nämlich beispielsweise die radial innen liegende Schicht 3 umfasst, könnte die radial außen liegende Schicht 4 aus dem faserverstärkten Material wieder an die dritte radial außen liegende Schicht 5, die die Laufbahn ausbildet, gedrückt oder gepresst werden. Dadurch könnte beispielsweise ein Ablösen der beiden Schichten 4 und 5 voneinander verhindert werden.

Die radial innen liegende Schicht 3 weist einen Innendurchmesser b auf, der kleiner ausgebildet ist als ein Außendurchmesser B der Welle 2. Dadurch, dass zur Montage der röhrenförmige Körper 1 bzw. die radial innen liegende Schicht 3 erwärmt wird, weitet sich der Innendurchmesser b der radial innen liegenden Schicht 3 auf, so dass der röhrenförmige Körper 1 bzw. die radial innen liegende Schicht 3 auf die Welle 2 geschoben werden kann. Der Innendurchmesser b ist dann größer als der Außendurchmesser der Welle B. Wenn der röhrenförmige Körper 1 bzw. die radial innen liegende Schicht 3 wieder auf die Temperatur der Welle 2 oder eine Umgebungstemperatur abgekühlt ist, können die radial innen liegende Schicht 3 und die Welle 2 ggf. eine kraftschlüssige Verbindung mit einer Überdeckung in einer radialen Richtung zueinander aufweisen.

Im Folgenden wird ein spezielles Ausführungsbeispiel für einen röhrenförmigen Körper (Hybridkörper) aus einem Faserverbundmaterial und einem Metall zur Montage mit Wärme beschrieben. Der röhrenförmige Körper kann im Folgenden auch zweischichtiger Ring genannt werden. Analog können im Folgenden die radial innen liegende Schicht auch als innerer Ring und die radial außen liegende Schicht als äußerer Ring bezeichnet werden:
Für die Montage eines zweischichtigen Ringes gemäß dem Ausführungsbeispiel aus einem inneren metallischen Ring (erste radial innen liegende Schicht) und einem äußeren faserverstärkten Ring (zweite radial außen liegende Schicht) auf einer Welle mit beispielsweise einem festen Presssitz mit mindestens Null-Luft kann das Verhältnis des Querschnitts bzw. einer Wandstärke des inneren Rings zu einem Querschnitt bzw. einer Wandstärke des äußeren Rings mindestens einen Wert von 1 oder einen höheren Wert betragen.

Bei einem festen Presssitz beträgt ein Verhältnis einer Überdeckung zu einem Durchmesser mindestens 0,0001 oder einen höheren Wert.

Mit anderen Worten ausgedrückt, ist nach dem Ausführungsbeispiel ein metallischer Ring innen und ein faserverstärkter Ring außen angeordnet. Die Temperatur des inneren Ringes wird um ca. 80°C erhöht. Ferner weist der innere Ring als metallisches Material Stahl auf. Ein thermischer Ausdehnungskoeffizient des inneren Rings weist einen Wert auf, der zwischen 1,0 · 10⁻⁵ 1/k und 1,5 · 10⁻⁵ 1/k liegt. Ferner weist der innere Ring eine Querkontraktionszahl bzw. eine Poisson'sche Zahl von 0,3 auf. Ferner weist der innere Ring bzw. dessen Material einen Elastizitätsmodul von 210.000 MPa auf.

Der äußere Ring weist als faserverstärktes Material einen faserverstärkten Kunststoff, kohlefaserverstärkten Kunststoff oder glasfaserverstärkten Kunststoff (FVK, CFK, GFK) auf. Ein thermischer Ausdehnungskoeffizienten des äußeren Ringes bzw. dessen Material liegt in einem Bereich zwischen 0 1/k und 2,5 · 10⁻⁵ 1/k. Ferner weist der äußere Ring eine Querkontraktionszahl bzw. Poisson'sche Zahl auf, die zwischen 0 und 2,5 liegt. Ein Elastizitätsmodul des äußeren Rings beträgt 210.000 MPa.

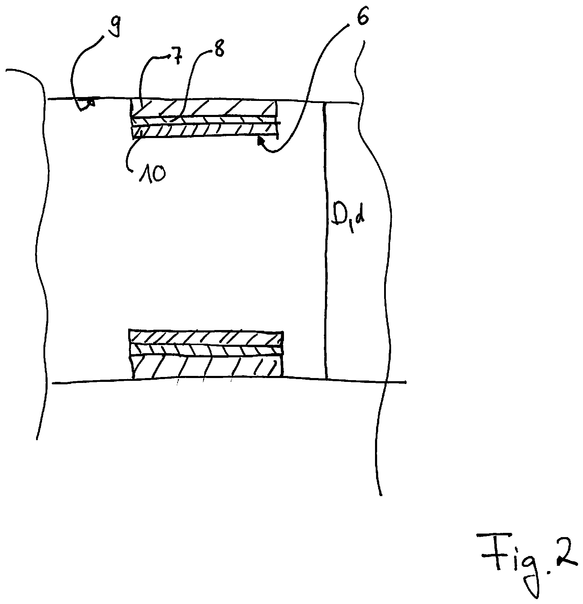

Fig. 2 zeigt eine schematische Querschnittsdarstellung eines röhrenförmigen Körpers, der in einer Bohrung montiert ist nach einem Ausführungsbeispiel.

Wie in Fig. 2 dargestellt, umfasst ein röhrenförmiger Körper 6 zur Montage in einer Bohrung 9 eine erste radial außen liegende Schicht 7. Ferner umfasst der röhrenförmige Körper 6 eine zweite radial innen liegende Schicht 8 aus einem faserverstärkten Material. Die erste radial außen liegende Schicht 7 schrumpft bei einem Einwirken einer Temperatur stärker als die zweite radial innen liegende Schicht 8.

Ferner kann der röhrenförmige Körper 6 bei dem Ausführungsbeispiel der Fig. 2 eine optionale dritte radial innen liegende Schicht 10 aufweisen. Die dritte Schicht 10 kann beispielsweise eine Lauffläche eines Außenrings eines Lagers ausbilden.

Zur Montage des röhrenförmigen Körpers 6 kann die radial außen liegende Schicht 7 abgekühlt werden. Dadurch, dass die radial außen liegende Schicht 7 bei einem Abkühlen stärker schrumpft als die radial innen liegende Schicht 8 aus dem faserverstärkten Material, kann die radial innen liegende Schicht 8 von der radial außen liegenden Schicht 7 zusammengedrückt werden. Da die radial außen liegende Schicht 7 nach dem Abkühlen einen kleineren Außendurchmesser d aufweist als ein Innendurchmesser D der Bohrung 9, kann der röhrenförmige Körper 6 in die Bohrung 9 eingebracht werden. Wenn sich der röhrenförmige Körper 6 bzw. die radial außen liegende Schicht 7 wieder auf eine Umgebungstemperatur oder eine Temperatur der Bohrung 9 erwärmt hat, können der röhrenförmige Körper 6 und die Bohrung 9 bzw. das Gehäuse der Bohrung 9 ggf. eine kraftschlüssige Verbindung mit einer Überdeckung zueinander aufweisen.

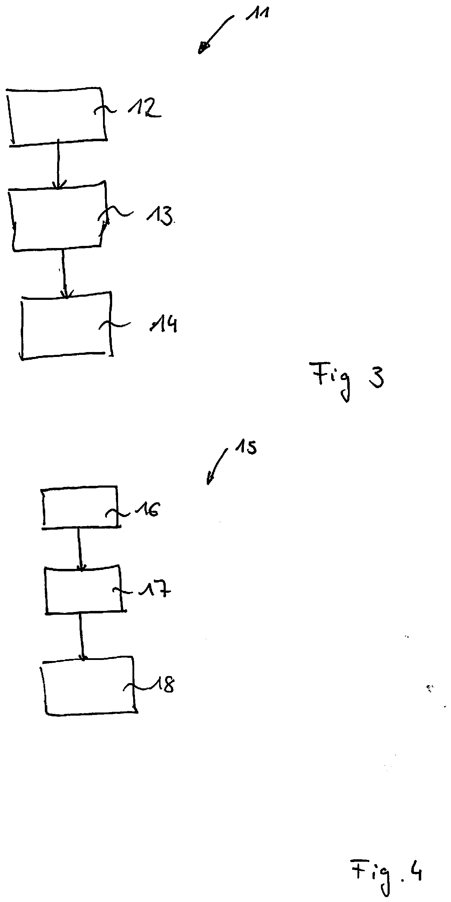

Fig. 3 zeigt eine schematische Darstellung eines Verfahrens zur Montage eines röhrenförmigen Körpers auf einer Welle.

Wie in Fig. 3 gezeigt werden bei einem Verfahren 11, zur Montage eines röhrenförmigen Körpers 1 mit einer ersten Schicht 3 und einer zweiten Schicht 4 aus einem faserverstärkten Werkstoff auf einer Welle 2 die Schichten zueinander angeordnet 12, sodass die erste Schicht 3 radial innen liegt und die zweite Schicht 4 aus dem faserverstärkten Werkstoff radial außen liegt. Die radial innen liegende Schicht wird auf eine Temperatur, die gegenüber einer Umgebungstemperatur erhöht ist, erwärmt 13. Anschließend wird der röhrenförmige Körper auf der Welle angeordnet 14.

Fig. 4 zeigt eine schematische Darstellung eines Verfahrens zur Montage eines röhrenförmigen Körpers in einer Bohrung.

Wie in Fig. 4 gezeigt, umfasst ein Verfahren 15 zur Montage eines röhrenförmigen Körpers 6 mit einer ersten Schicht 7 und einer zweiten Schicht 8 aus einem faserverstärkten Materials in eine Bohrung 9 das Anordnen 16 der Schichten zueinander. Dabei werden die Schichten so zueinander angeordnet, dass die erste Schicht 7 radial außen liegt und die zweite Schicht 8 aus dem faserverstärkten Werkstoff radial innen liegt. Anschließend wird die radial außen liegende Schicht 7 abgekühlt 17. Dabei wird die radial außen liegende Schicht 7 auf eine Temperatur abgekühlt, die kleiner als eine Umgebungstemperatur ist. Anschließend wird der röhrenförmige Körper 6 in der Bohrung angeordnet 18.

Die vorhergehend beschriebenen röhrenförmigen Körper und Verfahren zur Montage der röhrenförmigen Körper können beispielsweise nicht nur als Bauteil für Wälzlager oder zur Montage von Wälzlagern, wie in den Ausführungsbeispielen beschrieben, eingesetzt oder verwendet werden. Beispielsweise könnten die beschriebenen Körper oder Verfahren auch als oder in anderen Maschinenteilen bzw. zu deren Montage eingesetzt werden. Beispiele hierfür sind: Manschetten, Dichtungen, Zahnräder, Welle-Nabe-Verbindungen, etc.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 1: röhrenförmiger Körper
- 2: Welle
- 3: radial innen liegende Schicht
- 4: radial außen liegende Schicht
- 5: dritte Schicht
- 6: röhrenförmiger Körper
- 7: radial außen liegende Schicht
- 8: radial innen liegende Schicht
- 9: Bohrung
- 10: dritte Schicht
- 11: Verfahren
- 12: Anordnen
- 13: Erwärmung
- 14: Anordnen
- 15: Verfahren
- 16: Anordnen
- 17: Abkühlen
- 18: Anordnen
- D: Durchmesser Bohrung
- d: Durchmesser erster Schicht
- B: Durchmesser Welle
- b: Durchmesser Innenbohrung

## Patentansprüche

1. Röhrenförmiger Körper (1) zur Montage auf einer Welle (1), mit
einer ersten radial innen liegenden Schicht (3) und
einer zweiten radial außen liegenden Schicht (4) aus einem faserverstärkten Werkstoff, wobei sich die erste radial innen liegende Schicht (3) bei einem Einwirken einer Temperatur stärker ausdehnt als die zweite radial außen liegende Schicht (4),
**dadurch gekennzeichnet, dass** zum Anordnen (14) des röhrenförmigen Körpers (1) auf der Welle (2) die radial innen liegende Schicht (3) auf eine Temperatur, die gegenüber einer Umgebungstemperatur erhöht ist, erwärmt (13) wird.

2. Röhrenförmiger Körper nach Anspruch 1, wobei ein Verhältnis aus einer Wandstärke der radial innen liegenden Schicht (3) zu einer Wandstärke der radial außen liegenden Schicht (4) größer oder gleich 0,1 ist.

3. Röhrenförmiger Körper nach Anspruch 1, wobei die radial innen liegende Schicht (3) einen metallischen Werkstoff umfasst und/oder der faserverstärkte Werkstoff ein Faseverbundkunststoff, ein faserverstärkter Werkstoff, ein kohlefaserverstärkter Kunststoff, ein glasfaserverstärkter Kunststoff, ein aramidfaserverstärkter Kunststoff, ein naturfaserverstärketer Kunststoff oder ein Faser-Keramik-Verbund ist.

4. Röhrenförmiger Körper nach einem der vorhergehenden Ansprüche, wobei die radial außen liegende Schicht (4) einen thermischen Ausdehnungskoeffizienten aufweist, der in einem Bereich zwischen 0 1/k und 2,5 · 10⁻⁵ 1/k liegt und/oder die radial innen liegende Schicht (3) einen thermischen Ausdehnungskoeffizienten aufweist der in einem Bereich zwischen 1,0 · 10⁻⁵ 1/k und 1,5 · 10⁻⁵ 1/k liegt und/oder die radial außen liegende Schicht (4) eine Querkontraktionszahl zwischen 0 und 2,5 aufweist und/oder die radial innen liegende Schicht (3) eine Querkontraktionszahl von ca. 0,3 aufweist.

5. Röhrenförmiger Körper nach einem der vorhergehenden Ansprüche, wobei der röhrenförmige Körper (1) ein Innenring eines Lagers ist, mit einer dritten, radial außen liegenden Schicht (5), die eine Lauffläche ausbildet.

6. Röhrenförmiger Körper (6) zur Montage in einer Bohrung (9) mit
einer ersten radial außen liegenden Schicht (7) und
einer zweiten radial innen liegenden Schicht (8) **dadurch gekennzeichnet, dass** die radial innen liegenden Schicht aus einem faserverstärkten Material,
wobei die erste radial außen liegende Schicht (7) bei einem Einwirken einer Temperatur stärker schrumpft als die zweite radial innen liegende Schicht (8).

7. Röhrenförmiger Körper nach Anspruch 6, wobei der röhrenförmige Körper ein Außenring eines Lagers ist, der eine dritte, radial innen liegenden Schicht umfasst, die eine Lauffläche ausbildet.

8. Röhrenförmiger Körper nach einem der vorhergehenden Ansprüche, umfassend eine Temperiereinrichtung, die ausgebildet ist, den Körper zu erwärmen und/oder abzukühlen.

9. Verfahren (11) zur Montage eines röhrenförmigen Körpers (1) mit einer ersten Schicht (3) und einer zweiten Schicht (4 ) aus einem faserverstärkten Material auf einer Welle (2) umfassend:
Anordnen (12) der Schichten (3, 4) zueinander, sodass die erste Schicht (3) radial innen liegt und die zweite Schicht (4) aus dem faserverstärktem Werkstoff radial außen liegt, **dadurch gekennzeichnet, dass** es weiter die folgende Schritte umfasst:
Erwärmen (13) der radial innen liegenden Schicht (3) auf eine Temperatur, die gegenüber einer Umgebungstemperatur erhöht ist;
Anordnen (14) des röhrenförmigen Körpers (1) auf der Welle (2).

10. Verfahren nach Anspruch 9, wobei die Temperatur in einem Bereich zwischen 30° C und 400° C liegt.

11. Verfahren (15) zur Montage eines röhrenförmigen Körpers (6) mit einer ersten Schicht (7) und einer zweiten Schicht (8) aus einem faserverstärkten Material in einer Bohrung (9) **dadurch gekennzeichnet, dass** es die folgende Schritte umfasst:
Anordnen (16) der Schichten (7, 8) zueinander, sodass die erste Schicht (7) radial außen liegt und die zweite Schicht (8) aus dem faserverstärktem Werkstoff radial innen liegt;
Abkühlen (17) der radial außen liegenden Schicht auf eine Temperatur, die kleiner ist, als eine Umgebungstemperatur;
Anordnen (18) des röhrenförmigen Körpers (6) in der Bohrung (9).

12. Röhrenförmiger Körper nach einem der Ansprüche 1 bis 8, wobei ein Verhältnis aus einer Wandstärke der radial innen liegenden Schicht (3) zu einer Wandstärke der radial außen liegenden Schicht (4) kleiner als 1 ist.

## Claims

1. Tubular body (1) for mounting a shaft (1), with
a first radially inner layer (3) and
a second radially outer layer (4) of a fibre-reinforced material, the first radially inner layer (3) expanding to a greater extent under the effect of a temperature than the second radially outer layer (4),
**characterized in that**
for arranging (14) the tubular body (1) on the shaft (2), the radially inner layer (3) is heated (13) to a temperature that is increased with respect to an ambient temperature.

2. Tubular body according to Claim 1, a ratio of a wall thickness of the radially inner layer (3) to a wall thickness of the radially outer layer (4) being greater than or equal to 0.1.

3. Tubular body according to Claim 1, the radially inner layer (3) comprising a metallic material and/or the fibre-reinforced material being a fibre composite plastic, a fibre-reinforced material, a carbon-fibre-reinforced plastic, a glass-fibre-reinforced plastic, an aramid-fibre-reinforced plastic, a natural-fibre-reinforced plastic or a fibre-ceramic composite.

4. Tubular body according to one of the preceding claims, the radially outer layer (4) having a coefficient of thermal expansion that lies in a range between 0 1/k and 2.5 · 10⁻⁵ 1/k and/or the radially inner layer (3) having a coefficient of thermal expansion that lies in a range between 1.0 · 10⁻⁵ 1/k and 1.5 · 10⁻⁵ 1/k and/or the radially outer layer (4) having a Poisson's ratio of between 0 and 2.5 and/or the radially inner layer (3) having a Poisson's ratio of about 0.3.

5. Tubular body according to one of the preceding claims, the tubular body (1) being an inner race of a bearing, with a third, radially outer layer (5), which forms a running surface.

6. Tubular body (6) for mounting in a bore (9), with
a first radially outer layer (7) and
a second radially inner layer (8), **characterized in that** the radially inner layer of a fibre-reinforced material,
the first radially outer layer (7) shrinking to a greater extent under the effect of a temperature than the second radially inner layer (8).

7. Tubular body according to Claim 6, the tubular body being an outer race of a bearing, which comprises a third, radially inner layer, which forms a running surface.

8. Tubular body according to one of the preceding claims, comprising a temperature-control device, which is designed to heat and/or cool the body.

9. Method (11) for mounting a tubular body (1) with a first layer (3) and a second layer (4) of a fibre-reinforced material on a shaft (2), comprising:
arranging (12) the layers (3, 4) in relation to one another, so that the first layer (3) lies radially on the inside and the second layer (4) of the fibre-reinforced material lies radially on the outside, **characterized in that** it also comprises the following steps:
heating (13) the radially inner layer (3) to a temperature that is increased with respect to an ambient temperature;
arranging (14) the tubular body (1) on the shaft (2).

10. Method according to Claim 9, the temperature lying in a range between 30°C and 400°C.

11. Method (15) for mounting a tubular body (6) with a first layer (7) and a second layer (8) of a fibre-reinforced material in a bore (9), **characterized in that** it comprises the following steps:
arranging (16) the layers (7, 8) in relation to one another, so that the first layer (7) lies radially on the outside and the second layer (8) of the fibre-reinforced material lies radially on the inside;
cooling (17) the radially outer layer to a temperature that is less than an ambient temperature; arranging (18) the tubular body (6) in the bore (9).

12. Tubular body according to one of Claims 1 to 8, a ratio of a wall thickness of the radially inner layer (3) to a wall thickness of the radially outer layer (4) being less than 1.

## Revendications

1. Corps tubulaire (1) destiné à être monté sur un arbre (1), comprenant
une première couche (3) située radialement à l'intérieur et
une deuxième couche (4) située radialement à l'extérieur et constituée d'une matière renforcée par des fibres, la première couche (3) située radialement à l'intérieur se dilatant plus fortement que la deuxième couche (4) située radialement à l'extérieur sous l'effet d'une température,
**caractérisé en ce que**
pour disposer (14) le corps tubulaire (1) sur l'arbre (2), la couche (3) située radialement à l'intérieur est chauffée (13) à une température qui est accrue par rapport à une température ambiante.

2. Corps tubulaire selon la revendication 1, dans lequel un rapport d'une épaisseur de paroi de la couche (3) située radialement à l'intérieur à une épaisseur de paroi de la couche (4) située radialement à l'extérieur est supérieur ou égal à 0,1.

3. Corps tubulaire selon la revendication 1, dans lequel la couche (3) située radialement à l'intérieur comporte une matière métallique et/ou la matière renforcée par des fibres est une matière synthétique composite renforcée par des fibres, une matière renforcée par des fibres, une matière synthétique renforcée par des fibres de carbone, une matière synthétique renforcée par des fibres de verre, une matière synthétique renforcée par des fibres d'aramide, une matière synthétique renforcée par des fibres naturelles ou un composite à matrice céramique.

4. Corps tubulaire selon l'une des revendications précédentes, dans lequel la couche (4) située radialement à l'extérieur présente un coefficient de dilatation thermique qui est compris dans une plage entre 0 1/k et 2,5 · 10⁻⁵ 1/k et/ou la couche (3) située radialement à l'intérieur présente un coefficient de dilatation thermique qui est compris dans une plage entre 1,0 · 10⁻⁵ 1/k et 1,5 · 10⁻⁵ 1/k et/ou la couche (4) située radialement à l'extérieur présente un coefficient de Poisson compris entre 0 et 2,5 et/ou la couche (3) située radialement à l'intérieur présente un coefficient de Poisson d'environ 0,3.

5. Corps tubulaire selon l'une des revendications précédentes, dans lequel le corps tubulaire (1) est une bague intérieure d'un palier, comprenant une troisième couche (5) située radialement à l'extérieur, laquelle forme une surface de roulement.

6. Corps tubulaire (6) destiné à être monté dans un alésage (9), comprenant
une première couche (7) située radialement à l'extérieur et
une deuxième couche (8) située radialement à l'intérieur, **caractérisé en ce que** la couche située radialement à l'intérieur d'un matériau renforcé par des fibres,
la première couche (7) située radialement à l'extérieur se contractant plus fortement que la deuxième couche (8) située radialement à l'intérieur sous l'effet d'une température.

7. Corps tubulaire selon la revendication 6, dans lequel le corps tubulaire est une bague extérieure d'un palier, comprenant une troisième couche située radialement à l'intérieur, laquelle forme une surface de roulement.

8. Corps tubulaire selon l'une des revendications précédentes, comportant un dispositif de thermorégulation qui est conçu pour chauffer et/ou refroidir le corps.

9. Procédé (11) de montage d'un corps tubulaire (1) comprenant une première couche (3) et une deuxième couche (4) constituée d'un matériau renforcé par des fibres sur un arbre (2), comportant :
la disposition (12) des couches (3, 4) l'une par rapport à l'autre, de telle sorte que la première couche (3) soit située radialement à l'intérieur et que la deuxième couche (4) constituée de la matière renforcée par des fibres soit située radialement à l'extérieur, **caractérisé en ce qu'**il comprend en outre les étapes suivantes :
le chauffage (13) de la couche (3) située radialement à l'intérieur à une température qui est accrue par rapport à une température ambiante ;
la disposition (14) du corps tubulaire (1) sur l'arbre (2).

10. Procédé selon la revendication 9, dans lequel la température est comprise dans une plage entre 30° C et 400° C.

11. Procédé (15) de montage d'un corps tubulaire (6) comprenant une première couche (7) et une deuxième couche (8) constituée d'un matériau renforcé par des fibres dans un alésage (9), **caractérisé en ce qu'**il comprend les étapes suivantes :
la disposition (16) des couches (7, 8) l'une par rapport à l'autre, de telle sorte que la première couche (7) soit située radialement à l'extérieur et que la deuxième couche (8) constituée de la matière renforcée par des fibres soit située radialement à l'intérieur,
le refroidissement (17) de la couche située radialement à l'extérieur à une température qui est inférieure à une température ambiante ;
la disposition (18) du corps tubulaire (6) dans l'alésage (9).

12. Corps tubulaire selon l'une des revendications 1 à 8, dans lequel un rapport d'une épaisseur de paroi de la couche (3) située radialement à l'intérieur à une épaisseur de paroi de la couche (4) située radialement à l'extérieur est inférieur à 1.
